# FASCICULE DE BREVET EUROPEEN

(11) **EP 1 914 181 B1**
(45) Date de publication et mention de la délivrance du brevet: **22.04.2009**
(21) Numéro de dépôt: 07118024.4
(22) Date de dépôt: 08.10.2007
(51) Int. Cl.: B65G 47/26, B65G 47/30, B65G 47/84, B65G 33/02

(54) **Procédé et installation de changement de pas d'entités discrètes convoyées les unes à la suite des autres**
Verfahren und Vorrichtung zum Ändern des Abstandes geförderter Gegenstände
Method and device for changing the pitch of articles conveyed

(30) Priorité: 20.10.2006 FR 0609252
(43) Date de publication de la demande: 23.04.2008
(73) Titulaire: SIDEL PARTICIPATIONS, 76930 Octeville-sur-Mer (FR)
(72) Inventeur: Lecomte, Frédéric SIDEL PARTICIPATIONS, 76930 Octeville-sur-Mer (FR)
(74) Mandataire: Cabinet Plasseraud

(56) Documents cités:
- DE-A1- 3 529 716
- FR-A1- 2 496 065
- JP-A- 57 121 521

## Description

La présente invention a pour objet un procédé de changement de pas entre des entités discrètes convoyées les unes à la suite des autres entre un dispositif d'alimentation desdites entités avec un pas initial d'écartement donné entre deux entités alimentées successivement et un dispositif de réception desdites entités avec un pas final sensiblement plus grand que le pas initial.

Dans les installations de traitement de récipients tels que des bouteilles, il peut être requis une modification du pas d'espacement des récipients successifs lors du passage d'un poste de traitement à un poste de traitement suivant. Cela peut être le cas, par exemple, pour l'alimentation d'une station de traitement de récipients ou bouteilles devant subir un traitement plasma permettant d'aboutir à la formation d'un revêtement interne dans les récipients ou bouteilles. Il est alors nécessaire de prévoir un système de convoyage des entités discrètes permettant de transférer les entités discrètes du dispositif d'alimentation à la station de traitement tout en augmentant le pas ou l'écartement entre deux entités successives ou immédiatement voisines de manière que les deux entités immédiatement voisines soient alimentées à la station de traitement avec le pas correspondant au pas d'écartement de deux postes de traitement immédiatement voisins.

Il est connu d'avoir recours à un système à vis d'alimentation à pas variable apte à pivoter sur elle-même permettant d'augmenter le pas entre deux récipients alimentés successivement.

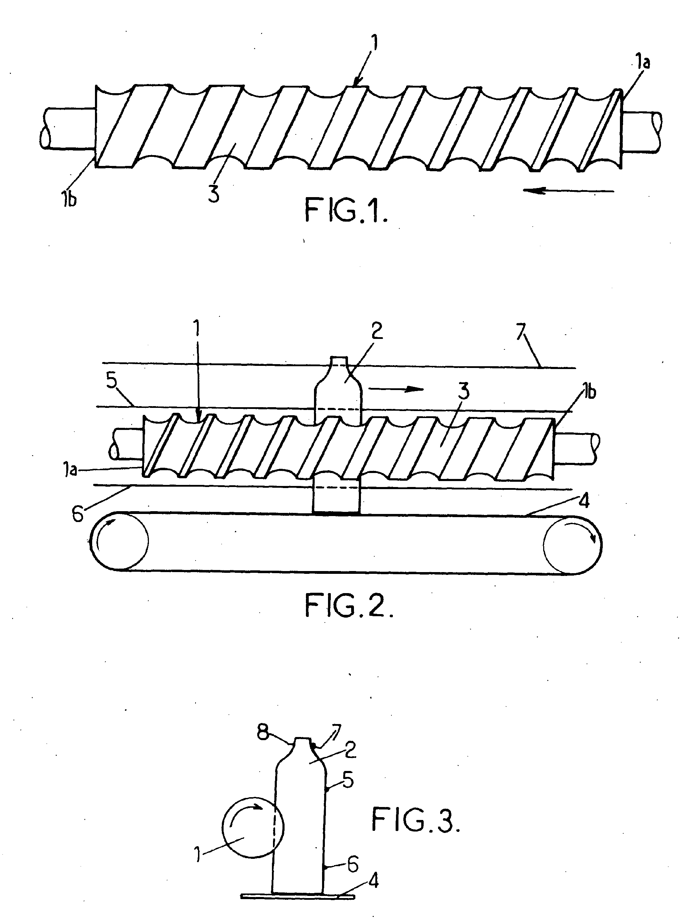

Un exemple d'un tel mode de réalisation d'une vis d'alimentation à pas variable est représenté selon une vue latérale sur la figure 1, les figures 2 et 3 l'illustrant respectivement selon une vue schématique latérale et une vue en coupe schématique transversale.

Il est prévu en amont de la vis d'alimentation 1 à pas variable des moyens d'alimentation d'entités discrètes, du type récipients ou bouteilles 2, chaque corps du récipient 2 étant apte à s'engager au niveau de l'extrémité amont la de la vis 1 dans une gorge ou rainure 3 formée sur le pourtour de la vis 1, le pas de la rainure 3 augmentant entre l'extrémité la amont et l'extrémité 1b aval de la vis 1 d'alimentation. Le fond de chaque récipient 2 est alors en appui sur un convoyeur 4 à bande sans fin. Afin de maintenir la bouteille ou récipient 2 dans la rainure 3 et en position d'appui sur le convoyeur 4 à bande sans fin, il est prévu une pluralité de guides fixes 5, 6, 7, préférentiellement sous la forme de rails. Deux guides 5, 6 fixes sont avantageusement prévus et conformés de manière telle que le côté du corps de la bouteille ou du récipient 2, qui est opposé au côté de la récipient ou de la bouteille 2 logé dans la rainure 3 de la vis 1 d'alimentation, soit apte à glisser sur ces deux guides 5, 6 fixes. De manière supplémentaire, il est également prévu un troisième guide 7 fixe apte à s'engager sous une saillie annulaire ou collerette 8 de la bouteille ou du récipient 2.

Si l'on souhaite augmenter le pas entre deux récipients alimentés successivement sur une vis à pas variable, il est nécessaire d'augmenter en conséquence la longueur de la vis d'alimentation car le pas entre les articles est toujours sensiblement le même en entrée de vis du fait que les récipients sont les unes contre les autres. Dès lors, seul le diamètre du récipient influe sur ce pas d'entrée alors qu'en sortie de vis, le pas dépend de ce que l'on cherche à atteindre. En d'autres termes, le pas de la vis en sortie conditionne la longueur de celle-ci. Il en résulte que le récipient est accéléré de sa vitesse d'entrée à sa vitesse de sortie, en générant des efforts sur le récipient qui peut être coincé et marqué. Ainsi, pour éviter ce phénomène, on joue sur la longueur de transition d'un pas à l'autre et donc sur la longueur totale de la vis. Mais cette longueur pose le problème de sa flexibilité, des vibrations, et de la difficulté de manutentionner une vis de grande longueur lors d'un changement de format de récipients. Par conséquent, l'utilisation de vis de grande longueur s'avère inacceptable dans la pratique courante.

Par ailleurs, afin de bien plaquer les récipients ou bouteilles dans la rainure 3 de la vis 1 d'alimentation, le convoyeur 4 à bande sans fin défile à une vitesse supérieure à la vitesse de la bouteille dans la vis 1 d'alimentation. De cette manière, le récipient 2 est maintenu droit dans la rainure 3 et est stabilisé. Toutefois, plus le pas en sortie de vis est grand, plus la vitesse de la bande du convoyeur 4 doit être grande.

Il faut également souligner que le transport de récipients par l'intermédiaire d'une vis d'alimentation à pas variable est susceptible de laisser des marques de rayures sur le corps du récipient ainsi transporté(e), ce risque étant d'autant plus élevé que le pas est grand et donc que l'angle est grand.

De plus, du fait de la taille d'une telle vis sans fin, il serait également difficile d'intégrer une telle vis dans une installation dont on souhaite limiter l'encombrement global.

Il faut aussi considérer qu'une vis d'alimentation de grande longueur est lourde et peu facile à manipuler. Il serait donc difficile de remplacer facilement et à l'aide d'une seule personne une telle vis d'alimentation de grande longueur.

De plus, il faut également noter qu'une vis de grande longueur est plus difficile à régler.

Or, pour certaines applications, par exemple pour le chargement de récipients dans les postes de dépôt d'un revêtement barrière par plasma excité par ondes électromagnétiques, il est requis un allongement beaucoup plus important du pas, pouvant atteindre par exemple de l'ordre de 72π.

Toutes les considérations qui précèdent tendent à limiter la mise en oeuvre des dispositifs d'alimentation à vis à des variations de pas n'excédant pas une certaine limite. Pour fixer les idées, la variation de pas entre récipients pour l'alimentation de machines telles des remplisseuses ou étiqueteuses est limitée à des valeurs de l'ordre de 25π à 30π.

L'invention a donc pour but de proposer des moyens (procédé et dispositif) permettant d'augmenter le pas entre entités alimentés successivement tout en limitant l'encombrement total d'un tel système et en facilitant les opérations de remplacement et de maintenance.

Selon un premier de ses aspects, la présente invention porte sur un procédé de changement de pas entre des entités discrètes convoyées les unes à la suite des autres entre un dispositif d'alimentation desdites entités avec un pas initial d'écartement donné entre deux entités alimentées successivement et un dispositif de réception desdites entités avec un pas final sensiblement plus grand que le pas initial, le procédé étant caractérisé en ce qu'il comprend une étape de transport des entités discrètes par un dispositif à vis d'alimentation à pas variable apte à réceptionner lesdites entités en aval dudit dispositif d'alimentation desdites entités, ladite vis comportant une gorge dans laquelle sont aptes à être logées et déplacées lesdites entités, de manière telle que le pas entre deux entités réceptionnées par ladite vis soit augmenté en aval de ladite vis jusqu'à un pas intermédiaire; et une étape de transfert et saisie des entités avec un pas intermédiaire par une roue de changement de pas apte à transférer lesdites entités dans ledit dispositif de réception avec ledit pas final.

Selon un second de ses aspects, la présente invention porte également sur une installation de changement de pas entre des entités discrètes convoyées les unes à la suite des autres entre un dispositif d'alimentation des entités avec un pas initial d'écartement donné entre deux entités alimentées successivement et un dispositif de réception desdites entités avec un pas final sensiblement plus grand que le pas initial, pour la mise en oeuvre du procédé tel que précédemment indiqué, l'installation étant caractérisée en ce qu'elle comprend un dispositif à vis d'alimentation à pas variable entre ledit pas initial et un pas intermédiaire apte à réceptionner dans une gorge périphérique lesdites entités en aval dudit dispositif d'alimentation, dans laquelle sont au moins partiellement logées lesdites entités ; et une roue de changement de pas apte à saisir, par des bras de transfert, les entités saisies avec le pas intermédiaire et à les transférer dans les postes de réception du dispositif de réception avec le pas final.

Afin de stabiliser les récipients en sortie du dispositif à vis d'alimentation, l'installation selon l'invention comprend une roue de transfert comprenant une pluralité de bras de transfert apte à saisir les entités avec le pas intermédiaire au niveau de l'extrémité aval de la vis d'alimentation.

Selon un mode de réalisation avantageux, les bras de transfert de la roue de transfert et de la roue de changement de pas comprennent chacune une tête de préhension sous la forme d'une pince à deux branches à ouverture commandée par came.

Afin de faciliter le remplacement des bras de transfert et les opérations de maintenance, la roue de transfert et la roue de changement de pas comprennent une plaque support rotative sur laquelle sont fixés les bras de transfert par des moyens de fixation amovible.

De manière avantageuse, les moyens de fixation amovible comprennent un ensemble vis/écrou.

Afin de faciliter le remplacement d'un bras de transfert par un autre, notamment en cas de modification des caractéristiques structurelles des entités convoyées, la vis est apte à s'insérer dans une languette intégrée dans le bras de transfert.

La présente invention est maintenant décrite à l'aide d'un exemple uniquement illustratif et nullement limitatif de la portée de l'invention, et à partir des illustrations suivantes, dans lesquelles :
- la figure 1 est une vue latérale d'une vis d'alimentation à pas variable selon l'art antérieur ;
- la figure 2 est une vue schématique latérale d'un dispositif à vis d'alimentation à changement de pas selon l'art antérieur ;
- la figure 3 est une vue en coupe schématique transversale du dispositif à vis d'alimentation illustré à la figure 2 ;
- la figure 4 est une vue schématique supérieure de l'installation de changement de pas selon l'invention ;
- la figure 5 est une vue en perspective de la roue de transfert appartenant au système de convoyage selon l'invention ;

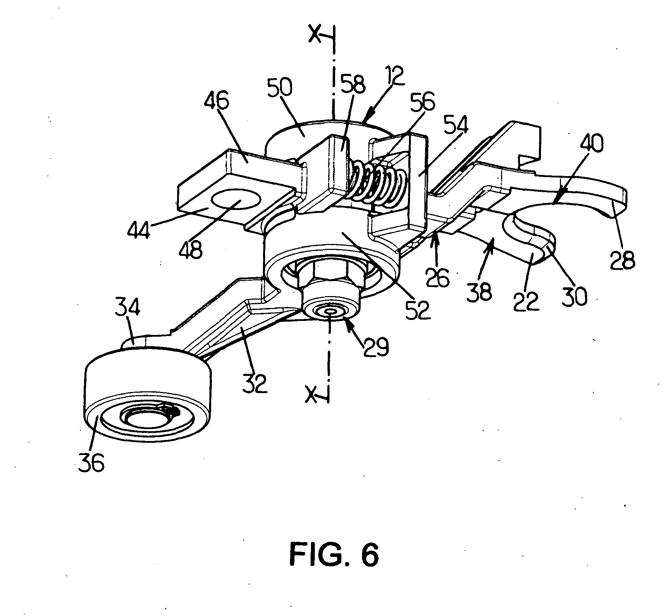

- la figure 6 est une vue détaillée en perspective du bras de transfert fixé à la roue de transfert de la figure 3 ;
- la figure 7 est une vue en perspective agrandie des moyens de fixation rapide amovible du bras de transfert sur la roue de transfert ;
- la figure 8 est une vue en perspective de la roue de changement de pas avec les bras de transfert ;

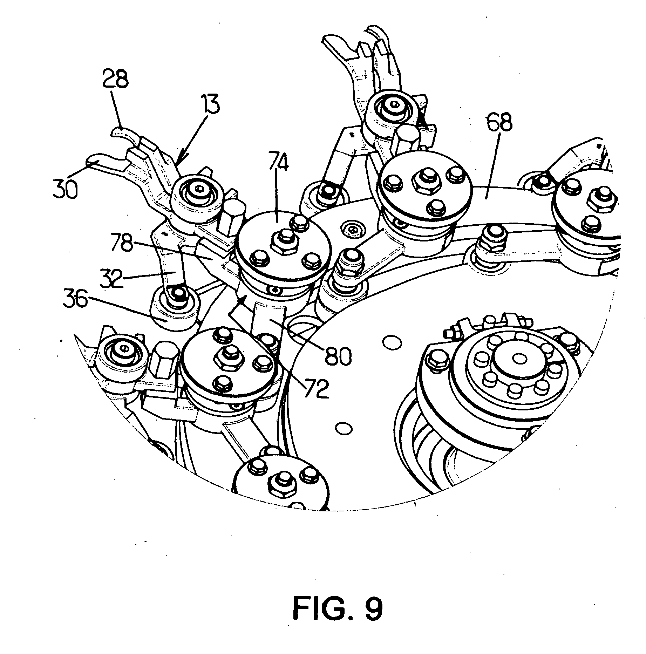

- la figure 9 est une vue en perspective agrandie des moyens de pivotement des bras de transferts fixés sur la roue de changement de pas, et

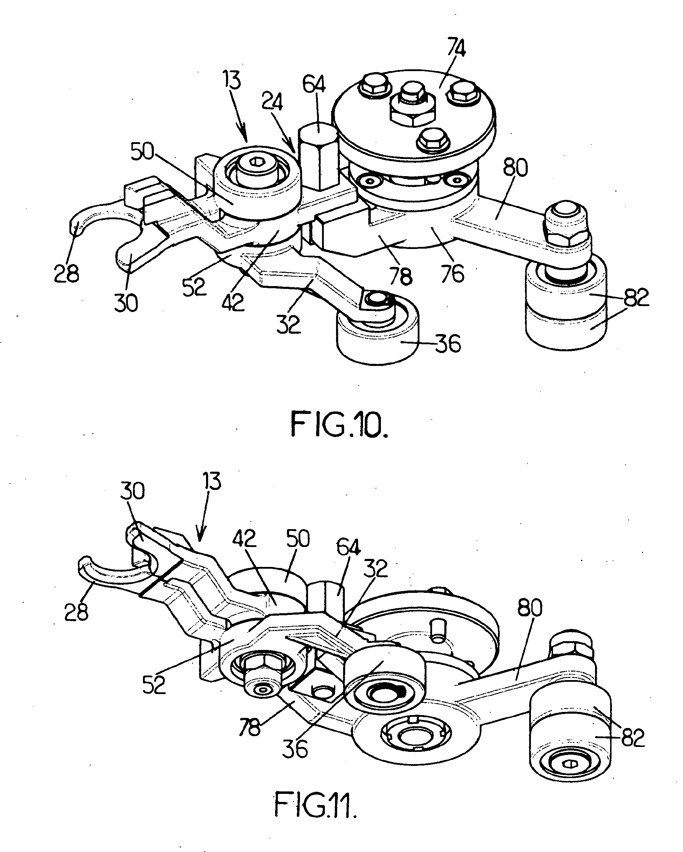

- les figures 10 et 11 sont respectivement deux vues en perspective supérieure et inférieure agrandie détaillée du bras de transfert associé aux moyens de pivotement du bras sur la roue de changement de pas.

Dans la suite de la description, on utilisera indifféremment les termes : entité, récipient, bouteille.

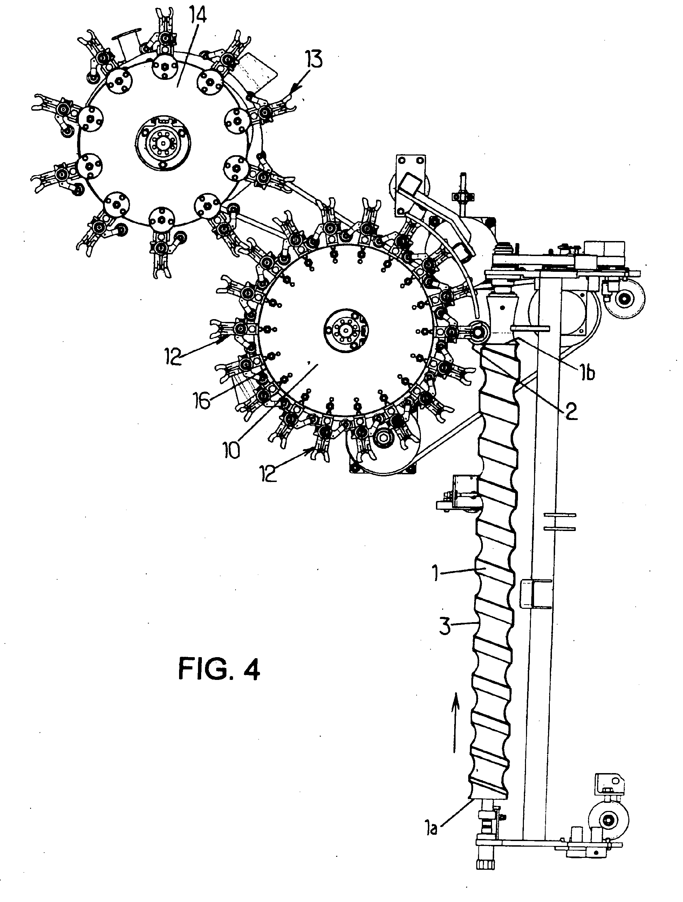

La figure 4 représente une vue supérieure de l'installation de changement de pas d'entités discrètes convoyées les unes à la suite des autres, et plus préférentiellement du type récipient ou bouteille 2, entre un dispositif d'alimentation, non représenté sur les figures mais de type connu en soi, des entités 2 discrètes et un dispositif de réception des entités 2 discrètes.

Le dispositif de réception est, préférentiellement une station de traitement des récipients 2, comprenant une pluralité de postes de réception pour le traitement des récipients 2, notamment pour le traitement plasma par excitation électromagnétique des récipients afin d'y déposer un revêtement interne, répartis régulièrement sur la périphérie d'un carrousel tournant autour d'un axe de rotation.

Le pas final entre deux postes voisins sur le carrousel est supérieur au pas de deux récipients alimentés par le dispositif d'alimentation en amont d'une vis 1 d'alimentation à pas variable, telle que précédemment décrite dans les figures 1 à 3, prévue apte à réceptionner par son extrémité amont la les entités en aval du dispositif d'alimentation d'entités, non représenté sur les figures mais de tout type connu en soi.

Du fait de l'augmentation du pas de la gorge 3 périphérique dans laquelle sont au moins partiellement logés et réceptionnés les entités 2, le pas entre deux entités 2 successives à l'extrémité aval 1b de la vis 1 est augmenté.

Toutefois, afin de limiter la longueur totale de la vis à pas variable, le pas entre deux entités en aval de la vis d'alimentation 1 est à un pas intermédiaire inférieur au pas final entre postes de réception du dispositif de réception. Il est donc encore nécessaire, lors d'une seconde étape d'augmenter le pas entre deux entités successives en passant du pas intermédiaire au pas final.

Pour ce faire, afin de stabiliser les entités 2 en sortie de la vis 1 à pas variable, il est prévu une roue 10 de transfert comprenant une pluralité de bras 12 de transfert aptes à saisir les entités 2 en aval de la vis 1 à pas variable.

Les bras 12 de transfert associés à la roue 10 de transfert sont préférentiellement tous identiques et régulièrement répartis sur la périphérie de la roue 10 de transfert, le pas entre deux bras 12 de transfert étant égal au pas des entités 2 au niveau de l'extrémité aval 1b de la vis 1 à pas variable, c'est-à-dire que le pas entre deux bras 12 de transfert correspond à un pas intermédiaire entre le pas initial à l'extrémité amont de la vis d'alimentation 1 et le pas final au niveau du dispositif de réception.

Afin de permettre la saisie des entités 2 déplacées par la vis 1 à pas variable, par les bras 12 de transfert de la roue 10 de transfert, il est prévu que les bras 12 de transfert présentent un déplacement circulaire avec la zone de saisie des entités 2 sensiblement tangentielle à la zone avale de déplacement longitudinal des entités 2 logées dans la gorge 3 de la vis 1 à pas variable.

Afin de permettre l'augmentation de pas entre deux entités 2 successives entre la roue 10 de transfert et le dispositif de réception, c'est-à-dire le passage d'un pas intermédiaire au pas final, il est prévu une roue 14 de changement de pas, aptes à saisir de manière tangentielle, par des bras de transfert 13, identiques aux bras de transfert 12 fixés sur la roue 10 de transfert, les entités 2 saisies par la roue 10 de transfert et à les transférer dans les postes de réception avec un pas final correspondant au pas de deux postes de réception voisins sur le carrousel du dispositif de réception ou de traitement.

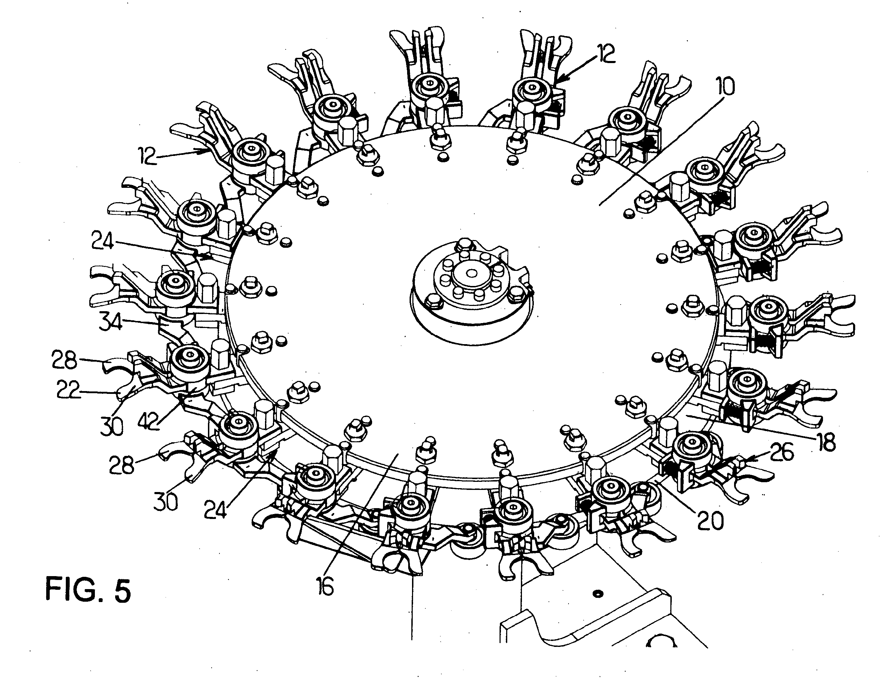

Sur la figure 5, il est illustré, selon une vue partielle en perspective, la roue 10 de transfert sur laquelle est fixée radialement sur sa périphérie une pluralité de bras 12 de transfert régulièrement répartis.

La roue 10 de transfert comprend une plaque 16 support rotative autour d'un axe de rotation sur laquelle sont fixés les bras 12 de transfert ainsi qu'une embase 18 fixe dont la périphérie définit un chemin 20 de came, chaque bras 12 de transfert comprenant une tête 22 de préhension apte à saisir le récipient, l'ouverture et la fermeture de la tête 22 de préhension étant commandée par un système de came, c'est-à-dire par le chemin 20 de came prévu sur la périphérie de l'embase 18 fixe, à savoir sur la paroi latérale de l'embase 18 se présentant sur la forme préférentielle d'un cylindre.

Les bras 12 de transfert sont fixés radialement sur la plaque 16 rotative de la roue 10 de transfert à l'aide de moyens 24 de fixation amovible tels que décrits plus précisément ultérieurement.

Les bras 12 de transfert fixés sur la roue 10 de transfert sont radialement inamovibles lors de la rotation de la roue 10 de transfert et lors de l'opération de saisie des récipients en aval de la vis 1 à pas variable.

Selon le mode de réalisation préférentiel, l'embase 18 fixe est prévue sous la plaque 16 rotative, les axes de rotation des roues 10, 14 étant prévus par commodité verticaux et les notions de « dessus » et de « dessous » renvoyant à ce référentiel.

La tête 22 de préhension du bras 12 de transfert se présente sous la forme d'une pince 26 de préhension à deux branches 28, 30 de préhension, l'une des deux branches 28 de la pince 26 étant reliée par des moyens 29 de pivotement axial autour d'un axe X-X à un bras 32 suiveur de came présentant, à son extrémité libre 34, un galet 36, librement rotatif, propre à prendre appui, en le suivant, sur le chemin 20 de came de l'embase 18 fixe.

De manière plus précise, le bras 12 de transfert se présente en deux parties, une partie fixe 38 comprenant la branche 30 de préhension qui est fixe et une partie pivotante 40 comprenant la branche 28 de préhension qui est apte à être pivotée autour de l'axe de pivotement X-X des moyens 29 de pivotement axial.

La branche 30 de préhension fixe est solidarisée à un tronçon 42 circulaire, une languette 44 étant fixée sur le tronçon 42 circulaire de manière diamétralement opposée aux branches 28, 30 de préhension, la languette 44 étant sensiblement planaire, prévue transversale par rapport à l'axe de pivotement X-X des moyens 29 de pivotement axial, et sous la forme d'un élément rectangulaire 46 avec un orifice central 48.

La partie pivotante 40 est constituée de la branche 28 de préhension pivotante reliée à deux tronçons parallèles circulaires supérieur et inférieur 50, 52, le tronçon 42 circulaire fixe étant apte à s'insérer par complémentarité entre les deux tronçons parallèles circulaires supérieur et inférieur 50, 52, de manière à ainsi définir un ensemble cylindrique.

Le bras 32 présentant le galet 36 de commande de l'ouverture et de la fermeture de la pince 26 de préhension est fixé sur le tronçon 52 circulaire inférieur. Toutefois, le principe de commande de l'ouverture et de fermeture de la pince peut également s'appliquer si le bras 32 est fixé sur le tronçon circulaire supérieur 50.

Un pont 54 formant paroi verticale est prévu reliant les deux tronçons supérieur et inférieur 50, 52 et formant une butée d'appui pour des moyens 56 de rappel élastique entre ledit pont 54 formant paroi verticale et une paroi 58 verticale liée à la languette 44, l'ouverture de la pince 26 étant réalisée en exerçant une force de compression des moyens 56 de rappel élastique par rapprochement du pont 54 vers la paroi 58 verticale, les tronçons supérieur et inférieur 50, 52 étant prévus pivotants autour de l'axe de pivotement vertical X-X.

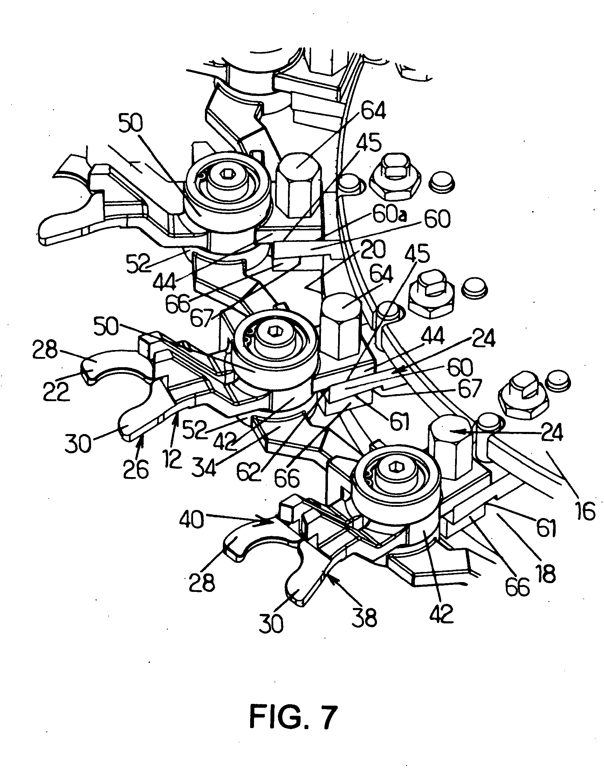

Il est illustré sur la figure 7 une vue en perspective des moyens 24 de fixation amovible du bras 12 de transfert sur la plaque 16 rotative.

Une plaquette 60 rectangulaire est prévue fixée sur la paroi inférieure de la plaque 16 rotative par tout moyen de fixation de manière telle qu'une partie de cette plaquette 60 forme une extension rectangulaire en saillie du rebord périphérique de la plaque 16 support rotative.

La languette 44 du bras 12 de transfert est apte à venir en appui sur la face 60a supérieure de la plaquette 60 en saillie, la languette 44 étant bloquée radialement de par la présence d'une butée 62 sur la face 45 inférieure de la languette 44 sous la forme d'un décrochement de matière.

La plaquette 60 présente également un décrochement central (non visible sur les figures), préférentiellement en définissant ainsi une extrémité en saillie à deux branches, de manière telle que, une fois la languette 44 plaquée sur la face 60a supérieure de la plaquette 60, l'orifice central de la languette 44 coïncide avec le décrochement de la plaquette 60 de façon à permettre le passage d'une vis 64 bloquée et maintenue en position par l'intermédiaire d'un écrou 66 plaqué par vissage sur la face 61 inférieure de la plaquette 60 en saillie. Les moyens 24 de fixation amovible du bras 12 de transfert sur la roue 10 de transfert comprennent donc préférentiellement des moyens de vissage sous la forme d'un ensemble vis 64 / écrou 66.

Préférentiellement, l'écrou 66 présente une face 67 supérieure inclinée de forme complémentaire à la face 61 inférieure de la plaquette 60 qui est également inclinée dans un sens inversé. De cette manière, il est obtenu un meilleur blocage tangentiel du bras 12 de transfert.

Ainsi, si l'utilisateur souhaite remplacer un bras 12 de transfert par un autre, il n'a alors qu'à dévisser la vis 64 et l'écrou 66. Du fait de la présence du décrochement dans la plaquette 60, l'utilisateur n'a pas à dévisser complètement l'écrou 66 sur la vis 64 pour enlever le bras 12 de transfert.

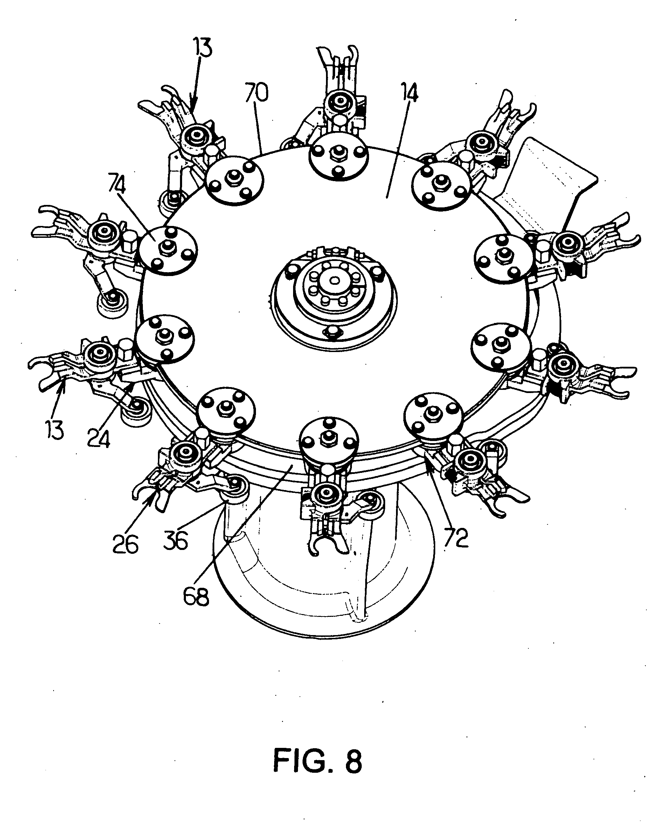

La figure 8 est une vue en perspective de la roue 14 de changement de pas comprenant une pluralité de bras de transfert 13 régulièrement répartis sur sa périphérie.

La roue 14 de changement de pas comprend une embase fixe 68 et une plaque support rotative 70.

Le bras 13 de transfert est du même type que le bras de transfert 12 tel que précédemment décrit avec un galet 36 apte à prendre appui sur le chemin de came défini par le rebord périphérique de l'embase fixe 68 de manière à commander l'ouverture et la fermeture de la tête de préhension de la pince 26.

Les moyens de fixation 72 du bras 13 de transfert sur la plaque 70 support rotative de la roue 14 à changement de pas comprennent une plaque 74 supérieure fixée ou directement intégrée dans la plaque 70 support rotative ainsi qu'un tronçon 76 inférieur monté librement pivotant sur la plaque 74 supérieure, le tronçon 76 inférieur comprenant un bras 78 de fixation en saillie de l'embase 68 fixe et sur l'extrémité duquel est fixé le bras 13 de transfert par l'intermédiaire de la languette 44 et des moyens 24 de fixation amovible tels que précédemment décrits.

Le tronçon 76 inférieur présente également un bras 80 suiveur de came présentant à son extrémité une paire de galets 82 disposés l'un au-dessus de l'autre et apte à suivre un chemin de came et un chemin de contre came formés dans l'embase 68 fixe de manière à définir le pivotement du bras 13 de transfert et ainsi de permettre l'augmentation de pas entre deux entités successivement saisies par les bras 13 de transfert de la roue 14 de changement de pas, et ainsi aboutissant au passage du pas intermédiaire au pas final.

## Revendications

1. Procédé de changement de pas entre des entités (2) .discrètes convoyées les unes à la suite des autres entre un dispositif d'alimentation desdites entités avec un pas initial d'écartement donné entre deux entités (2) alimentées successivement et un dispositif de réception desdites entités (2) avec un pas final sensiblement plus grand que le pas initial,
**caractérisé en ce qu'**il comprend les étapes de :
- transport des entités (2) discrètes par un dispositif (1) à vis d'alimentation à pas variable apte à réceptionner lesdites entités (2) en aval dudit dispositif d'alimentation desdites entités (2), ladite vis (1) comportant une gorge (3) dans laquelle sont aptes à être logées et déplacées lesdites entités (2), de manière telle que le pas entre deux entités (2) réceptionnées par ladite vis (1) soit augmenté en aval de ladite vis (1) jusqu'à un pas intermédiaire;
- transfert et saisie des entités (2) avec un pas intermédiaire par une roue (14) de changement de pas apte à transférer lesdites entités (2) dans ledit dispositif de réception avec ledit pas final.

2. Installation de changement de pas entre des entités (2) discrètes convoyées les unes à la suite des autres entre un dispositif d'alimentation desdites entités (2) avec un pas initial d'écartement donné entre deux entités (2) alimentées successivement et un dispositif de réception desdites entités (2) avec un pas final sensiblement plus grand que le pas initial, pour la mise en oeuvre du procédé selon la revendication 1,
**caractérisée en ce qu'**elle comprend
- un dispositif (1) à vis d'alimentation à pas variable entre ledit pas initial et un pas intermédiaire apte à réceptionner dans une gorge (3) périphérique lesdites entités (2) en aval dudit dispositif d'alimentation, dans laquelle sont au moins partiellement logées lesdites entités (2) ;
- une roue (14) de changement de pas apte à saisir, par des bras (13) de transfert, lesdites entités (2) saisies avec ledit pas intermédiaire et à les transférer dans lesdits postes de réception du dispositif de réception avec ledit pas final.

3. Installation de changement de pas selon la revendication précédente, **caractérisée en ce qu'**elle comprend une roue (10) de transfert comprenant une pluralité de bras (12) de transfert apte à saisir, avec ledit pas intermédiaire, lesdites entités (2) au niveau de l'extrémité (1b) aval de ladite vis (1) d'alimentation.

4. Installation de changement de pas selon la revendication 2 ou 3, **caractérisée en ce que** lesdits bras (12, 13) de transfert de ladite roue (10) de transfert et de ladite roue (14) de changement de pas comprennent chacune une tête (22) de préhension sous la forme d'une pince (26) à deux branches (28, 30) à ouverture commandée par came.

5. Installation de changement de pas selon l'une quelconque des revendications 2 à 4, **caractérisé en ce que** ladite roue (10) de transfert et ladite roue (14) de changement de pas comprennent une plaque support rotative sur laquelle sont fixés les bras (12, 13) de transfert par des moyens (24) de fixation amovible.

6. Installation selon la revendication précédente 5, **caractérisée en ce que** lesdits moyens (24) de fixation amovible comprennent un ensemble vis (64) / écrou (66).

7. Installation selon la revendication précédente 6, **caractérisée en ce que** la vis (64) est apte à s'insérer dans, une languette (44) intégrée dans le bras (12, 13) de transfert.

## Claims

1. Method for changing the pitch between discrete entities conveyed in succession between a device for feeding said entities at an initial spacing pitch provided between two entities (2) fed in succession and a device for receiving said entities (2) at a final pitch substantially greater than the initial pitch,
**characterized in that** it comprises the steps of:
- transporting the discrete entities (2) by a variable pitch feed screw device (1) adapted for receiving said entities (2) downstream of said entities feeding device, said screw (1) comprising a groove (3) in which said entities (2) are adapted for being housed and moved, so that the pitch between two entities (2) received by said screw (1) is increased downstream of said screw (1) as far as an intermediate pitch;
- transferring and gripping the entities (2) at an intermediate pitch by a pitch changing wheel (14) adapted for transferring said entities (2) into said receiving device at said final pitch.

2. Installation for changing the pitch between discrete entities (2) conveyed in succession between a device for feeding said entities (2) at an initial spacing pitch provided between two entities (2) fed in succession and a device for receiving said entities (2) at a final pitch substantially greater than the initial pitch, for the implementation of the method according to claim 1,
**characterized in that** it comprises:
- a device (1) with a feed screw having a variable pitch between said initial pitch and an intermediate pitch adapted for receiving said entities (2) downstream of said feed device in a peripheral groove (3), in which said entities (2) are at least partially housed;
- a pitch changing wheel (14) adapted for gripping, with transfer arms (13), said entities (2) gripped at said intermediate pitch and for transferring said entities into said receiving stations of the receiving device at said final pitch.

3. Pitch changing installation according to the preceding claim, **characterized in that** it comprises a transfer wheel (10) comprising a plurality of transfer arms (12) adapted for gripping, at said intermediate pitch, said entities (2) in the region of the downstream end (1b) of said feed screw (1).

4. Pitch changing installation according to claim 2 or 3, **characterized in that** said transfer arms (12, 13) of said transfer wheel (10) and of said pitch changing wheel (14) each comprise a gripping head (22) in the form of a gripping clamp (26) with two arms (28, 30) with a cam-controlled opening.

5. Pitch changing installation according to any one of claims 2 to 4, **characterized in that** said transfer wheel (10) and said pitch changing wheel (14) comprise a rotating support plate on which the transfer arms (12, 13) are fixed by removable fixing means (24).

6. Installation according to preceding claim 5, **characterized in that** said removable fixing means (24) comprise an assembly with screw (64)/nut (66).

7. Installation according to preceding claim 6, **characterized in that** the screw (64) is adapted for being inserted into a tab (44) incorporated in the transfer arm (12, 13).

## Patentansprüche

1. Verfahren zum Ändern des Abstands zwischen diskreten, aufeinander folgend geförderten Objekten (2) zwischen einer Zuführungsvorrichtung für die Objekte mit einem Anfangsabstand mit einem gegebenen Zwischenraum zwischen zwei Objekten (2), die nacheinander folgend zugeführt werden, und einer Aufnahmevorrichtung für die Objekte (2) mit einem Endabstand, der deutlich größer als der Anfangsabstand ist,
**dadurch gekennzeichnet, dass** es die folgenden Schritte umfasst:
Transportieren der diskreten Objekte (2) durch eine Schraubvorrichtung (1) zum Zuführen mit einem variablen Abstand, die zum Aufnehmen der Objekte (2) stromabwärts von der Zuführungsvorrichtung für die Objekte (2) geeignet ist, wobei die Schraube (1) eine Keilrille (3) umfasst, in der die Objekte (2) derart aufgenommen und verschoben werden können, dass der Abstand zwischen zwei Objekten (2), die durch die Schraube (1) aufgenommen werden, stromabwärts der Schraube (1) bis zu einem Zwischenabstand vergrößert wird,
Übertragen und Ergreifen der Objekte (2) mit einem Zwischenabstand durch ein Abstandsänderungsrad (14), das zum Übertragen der Objekte (2) in die Aufnahmevorrichtung mit dem Endabstand geeignet ist.

2. Vorrichtung zum Ändern des Abstands zwischen diskreten, aufeinander folgend geförderten Objekten (2) zwischen einer Zuführungsvorrichtung für die Objekte (2) mit einem Anfangsabstand mit einem gegebenen Zwischenraum zwischen zwei Objekten (2), die nacheinander folgend zugeführt werden und einer Aufnahmevorrichtung für die Objekte (2) mit einem Endabstand, der deutlich größer als der Anfangsabstand ist, zum Ausführen des Verfahrens nach Anspruch 1,
**dadurch gekennzeichnet, dass** sie umfasst:
eine Schraubvorrichtung (1) zum Zuführen mit einem variablen Abstand zwischen dem Anfangsabstand und einem Zwischenabstand, die zum Aufnehmen der Objekte (2) in einer umfangseitigen Keilrille (3) stromabwärts der Zuführungsvorrichtung geeignet ist, in der die Objekte (2) zumindest teilweise aufgenommen werden können;
ein Abstandsänderungsrad (14), das zum Ergreifen der Objekte (2) durch Übertragungsarme (13) geeignet ist, die mit dem Zwischenabstand ergriffen werden, und dazu geeignet ist, diese mit dem Endabstand in die Aufnahmestellen der Aufnahmevorrichtung zu übertragen.

3. Vorrichtung zum Ändern eines Abstands nach dem vorstehenden Anspruch, **dadurch gekennzeichnet, dass** sie ein Übertragungsrad (10) umfasst, das eine Mehrzahl von Übertragungsarmen (12) aufweist, die geeignet sind, die Objekte (2) mit dem Zwischenabstand auf der Höhe des stromabwärtsseitigen Endes (1b) der Zuführungsschraube (1) zu ergreifen.

4. Vorrichtung zum Ändern eines Abstands nach Anspruch 2 oder 3, **dadurch gekennzeichnet, dass** die Übertragungsarme (12, 13) des Übertragungsrades (10) und des Abstandsänderungsrades (14) jeweils einen Greifkopf (22) in Form einer Klemme (26) aus zwei Armen (28, 30), die durch einen Nocken gesteuert zu öffnen sind, aufweisen.

5. Vorrichtung zum Ändern eines Abstands nach einem der Ansprüche 2 bis 4, **dadurch gekennzeichnet, dass** das Übertragungsrad (10) und das Abstandsänderungsrad (14) eine drehbare Halteplatte aufweisen, auf der die Übertragungsarme (12, 13) durch lösbare Befestigungsmittel (24) befestigt sind.

6. Vorrichtung nach dem vorstehenden Anspruch 5, **dadurch gekennzeichnet, dass** die Mittel (24) zum lösbaren Befestigen einen Schrauben-(64)/Mutter-(66)-Aufbau umfassen.

7. Vorrichtung nach dem vorstehenden Anspruch 6, **dadurch gekennzeichnet, dass** die Schraube (64) dazu geeignet ist, in eine Lasche (44) eingeführt zu werden, die in dem Übertragungsarm (12, 13) integriert ist.
